Europäisches Patentamt

European Patent Office

Office européen des brevets

(19)

(11) EP 1 143 535 A1

(12) **EUROPÄISCHE PATENTANMELDUNG**

(43) Veröffentlichungstag:
    10.10.2001 Patentblatt 2001/41

(51) Int Cl.⁷: $H01L\ 41/09$

(21) Anmeldenummer: 01107919.1

(22) Anmeldetag: 28.03.2001

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **06.04.2000 DE 10017138**

(71) Anmelder: **SIEMENS AKTIENGESELLSCHAFT**
    **80333 München (DE)**

(72) Erfinder:
• **Fischer, Bernhard**
  **84513 Töging a. Inn (DE)**
• **Gottlieb, Bernhard, Dr.**
  **81739 München (DE)**
• **Kappel, Andreas, Dr.**
  **85649 Brunnthal (DE)**
• **Mock, Randolf, Dr.**
  **85662 Hohenbrunn (DE)**
• **Ulivieri, Enrico, Dr.**
  **81669 München (DE)**

(54) **Taumelmotor**

(57) Der Taumelmotor weist mindestens eine drehbar und axial verschiebbar geführte Welle (1) sowie mindestens einen die Welle (1) umschließenden Antriebsring (3,3',3"), der gegen eine Längsachse (I) der Welle (1) verkippbar ist, auf und ist dadurch gekennzeichnet, dass der mindestens eine Antriebsring (3,3',3") rotationsfrei und reibschlüssig um die Welle (1) verschiebbar ist.

FIG 9

EP 1 143 535 A1

**Beschreibung**

Die Erfindung betrifft einen Taumelmotor für Linear- und/oder Rotationsbewegungen.

Es sind elektromagnetische Motoren bekannt, bei denen eine Drehbewegung mittels einer Getriebeschnecke in eine Linearbewegung umgesetzt wird.

Aus M. Bexell, S. Johansson: Fabrication and evaluation of a piezoelectric miniature motor, Sensors and Actuators 75 (1999) p. 8-16 und aus M. Bexell, S. Johansson: Characteristics of a piezoelectric miniature motor, Sensors and Actuators 75 (1999) p. 118-130, ist ein miniaturisierter, sogenannter "Inchworm"-Motor bekannt, bei dem eine Rotation durch eine Kontraktion und Biegung mehrerer piezoelektrischer Elemente bewirkt wird.

In: G. Schadebrodt and B. Salomon: The Piezo Traveling Wave Motor, a New Element in Actuation, PCIM, July 1990, wird ein Wanderwellenmotor beschrieben, bei dem ein Stator mittels des piezoelektrischen Effekts eine resonante Wellenbewegung auf seiner Oberfläche erzeugen kann und so eine einen Rotor antreibt.

Ein weiterer piezoelektrisch angetriebener Wanderwellenmotor ist in EP 0 788 664 B1 beschrieben.

Aus M. Fleischer, H. Meixner: Ultraschallmotoren mit piezoelektrischem Antrieb, Physik in unserer Zeit, 22. Jahrg. 1991, Nr. 4, ist ein Ultraschallmotor mit piezoelektrischem Antrieb bekannt, bei dem im Ultraschallbereich piezoelektrisch angeregte Stäbe einen walzenförmigen Rotor durch asymmetrisches Aufsetzen antrieben.

In H.-H. Anger: Piezoelektrische Vibroantriebe - eine Übersicht über wesentliche technische Lösungen, Hermsdorfer technische Mitteilungen, 30. Jahrg., Juni 1990, Heft 78, S. 2481 - 2485 wird eine Übersicht über piezokeramische Antriebe gegeben.

Eine Umwandlung einer Drehbewegung in eine Vorschubbewegung einer Welle durch mehrere verkippte Wälzkörper ist aus DE 27 09 006 A1 bekannt, wobei die Wälzkörper um eine Achse rotierend angetrieben werden.

Es ist die Aufgabe der vorliegenden Erfindung einen kompakten, leichtbauenden und leistungsfähigen Linear- und/oder Rotationsmotor bereitzustellen, insbesondere zur Erzeugung eines hohen Drehmomentes bei einer niedrigen Drehzahl ohne zusätzliches Getriebe.

Der Taumelmotor weist mindestens eine drehbar und axial verschiebbar geführte Welle auf. Weiterhin ist mindestens ein Antriebsring vorhanden, welcher die Welle umschließt. Die Führung der Welle kann z. B. über ein Lager oder lagerfrei durch mehrere Antriebsringe geschehen.

Der mindestens eine Antriebsring ist zudem gegen eine Längsachse der Welle verkippbar. Er ist reibschlüssig und mindestens teilweise rotationsfrei um die Welle verschiebbar.

Die Verschiebebewegung kann periodisch sein, z. B. kreisförmig oder elliptisch. Selbstverständlich sind auch nur Abschnitte solcher Bewegungen ausführbar.

Unter "rotationsfrei" wird verstanden, dass der Antriebsring als ganzes um die Welle herum verschoben bzw. angetrieben werden kann, aber zumindest ein Teil des Antriebsrings nicht wesentlich um eine körperfeste Achse rotiert wird. Dabei ist es möglich, dass der nicht rotierende Teil des Antriebsrings, z. B. eine äußere Ringschale, gegen einen anderen Teil, z. B. eine innere Ringschale, frei rotierbar ist. Die Verschiebung des Antriebsrings geschieht also rotationsfrei.

Durch die Reibschlüssigkeit zwischen Antriebsring und Welle wird sichergestellt, dass die Bewegung des Antriebsrings auf die Welle übertragen wird. Dies schließt die Möglichkeit zum Freilauf durch Aufhebung des Reibschlusses nicht aus.

Die Verkippung bewirkt eine relative Neigung des Antriebsrings in Richtung der Längsachse I der Welle. Die Verkippung kann in der Regel durch einen Verkippungswinkel δ ausgedróckt werden, der konstant oder zeitlich variabel sein kann.

In der folgenden Beschreibung sei zum besseren Verständnis angenommen, dass die Längsachse I der Welle auf der z-Achse liege, und der Antriebsring scheibenförmig sei. Bei einem Verkippungswinkel d = 0 ("Ruhelage") sei der Antriebsring an einer Ebene, ausgerichtet ("Ringebene"), die der (x-y)-Ebene entspricht. Der Taumelmotor ist aber selbstverständlich nicht auf diese Anordnung beschränkt, sondern kann z. B. auch andere Verkippungslagen oder anders geformte Antriebsringe aufweisen.

Der Taumelmotor kann an in den Betriebsmodi reiner Linearantrieb, reiner Rotationsantrieb oder einer Kombination dieser beiden Betriebsarten gefahren werden.

Mehrere Antriebsringe können unabhängig voneinander oder miteinander gekoppelt bewegt werden.

Der Taumelmotor weist den Vorteil auf, dass er verschleißarm ist, da ausschließlich Rollreibung auftritt. Weiterhin tritt nur eine geringe Schallentwicklung auf.

Auch ergibt sich der Vorteil, dass ein hohes Antriebsmoment übertragbar ist.

Auch ist der Taumelmotor zu seinem Vorteil universell steuerbar, z. B. schrittweise oder kontinuierlich, bezüglich seiner Dreh- und Vorschubrichtung, seiner Dreh- und Vorschubgeschwindigkeit und seines Dreh- und Vorschubmomentes. Zudem können Drehbewegung und linearer Vorschub getrennt oder kombiniert realisiert werden. Auch sind eine Selbsthemmung oder ein Freilauf steuerbar.

Weiterhin ergibt sich ein geringes Baugewicht in Verbindung mit kompakter Bauform, unter anderem, weil kein Getriebe benötigt wird.

Auch ist ein günstiger hoher Wirkungsgrad erreichbar.

Kurze Hochlauf- und Stoppzeiten im Millisekundenbereich sind ebenfalls realisierbar.

Der Antriebsring des Taumelmotors wird durch mindestens ein Verkippmittel mit mindestens einem Stellantrieb gegen die Welle verkippt. Es ist vorteilhaft, wenn das Verkippmittel mindestens zwei lineare Stellantriebe umfasst. Zwei Antriebsringe können beispielsweise durch jeweils ein Verkippmittel mit jeweils zwei linearen Stellantrieben verkippt werden oder durch ein gemeinsames Verkippmittel mit zwei Stellantrieben. Durch die Verwendung mindestens zweier linearer Stellantriebe ist eine vergleichsweise einfache Steuerung der Verkippungsbewegung, z. B. durch Überlagerung von Linearbewegungen, möglich.

Es ist insbesondere vorteilhaft, wenn die vorzugsweise linearen Stellantriebe des Verkippmittels im wesentlichen parallel zur Längsachse I der Welle ausgerichtet sind, weil sich so eine weiter vereinfachte Steuerung der Verkippbewegung ergibt.

Es ist zur einfachen Steuerung der Verkippbewegung auch vorteilhaft, wenn die Stellantriebe des Verkippmittels winkelsymmetrisch und mit gleichem Abstand $R_A$ bezüglich des Mittelpunktes des Antriebsrings angebracht sind.

Vorteilhaft zur einfachen Steuerung ist ein Verkippmittel mit drei Stellantrieben, insbesondere winkelsymmetrisch und mit gleichem Abstand $R_A$ bezüglich des Mittelpunktes des Antriebsrings angebracht.

Es ist auch günstig, wenn der mindestens eine Antriebsring mittels mindestens eines Antriebsmittels, umfassend mindestens zwei nicht kollinear ausgerichtete Stellantriebe, um die Welle verschiebbar ist. Dadurch kann auf einfache Weise eine beliebige Bewegung in einer Ebene ausgeführt werden. Insbesondere bei einer Anordnung der Stellantriebe des jeweiligen Antriebsmittels senkrecht zur Längsachse I und rechtwinklig zueinander ist eine einfache ebene Bewegung gewährleistet.

Antriebsmittel und Verkippmittel können auch fest, z. B. mechanisch gekoppelt sein und mittels gemeinsamer Stellantriebe bewegt werden.

Es ist günstig, wenn mindestens ein Stellantrieb, insbesondere alle Stellantriebe, ein elektromechanischer Aktor ist. Bei einem elektromechanischen Aktor kann durch eine elektrische Steuergröße, z. B. einen Strom oder eine Spannung, ein Volumenänderung und dadurch ein Hub realisiert werden. Ein Beispiel für einen elektromechanischen Aktor ist ein piezoelektrischer, magnetostriktiver oder elektrostriktiver Aktor. Ein solcher Aktor weist den Vorteil auf, dass er sehr schnell und präzise ansteuerbar ist.

Insbesondere ein Vielschicht-Piezoaktor ist preiswert, mit hoher Präzision herstellbar und präzise bewegbar.

Es kann zur Erreichung eines preiswerten Taumelmotors vorteilhaft sein, einen hydraulischen oder elektromagnetischen Aktor einzusetzen.

Es ist besonders vorteilhaft, wenn der Taumelmotor mindestens parallel zu einem ersten Antriebsring mindestens einen weiteren Antriebsring aufweist. Dadurch kann das Drehmoment der Welle gesteigert werden.

Es ist dabei insbesondere vorteilhaft, wenn beide Antriebsringe durch mindestens ein Verkippmittel gegeneinander abgestützt sind, weil sich so eine platzsparende und preisgünstige Konstruktion ergibt. Allerdings ist eine solche Positionierung der Antriebsringe und Verkippmittel nicht zwingend.

Es ist auch vorteilhaft, wenn der Taumelmotor mindestens einen dritten Antriebsring aufweist, der parallel zum ersten und zum weiteren Antriebsring steht. Dadurch ist es möglich, die Welle drehmomentenfrei und ohne separates Lager zu betreiben. In diesem Fall kann die Welle ausschließlich durch die Antriebsringe selbst geführt werden. Dabei ist es besonders vorteilhaft, wenn der weitere (mittlere) Antriebsring sowohl gegen den ersten Antriebsring als auch gegen den dritten Antriebsring mittels jeweils eines Verkippmittels abgestützt ist, weil sich so eine platzsparende und preisgünstige Konstruktion ergibt. Allerdings ist eine solche Positionierung der Antriebsringe und Verkippmittel nicht zwingend.

Es kann zur verbesserten Führung, insbesondere bei weniger als drei Antriebsringen oder einer nicht drehmomentenfreien Anordnung von drei oder mehr Antriebsringen vorteilhaft sein, wenn die Welle durch mindestens ein Lager, insbesondere zwei Lager, geführt wird.

Die Wahl des Lagers ist nicht eingeschränkt, sondern erlaubt eine axiale Bewegung und eine Drehbewegung der Welle darin, z. B. in Form von Gleit- oder Rollagern. Dabei ist eine nur abschnittsweise so gekennzeichnete Lage der Welle ausreichend.

Es ist für einen gleichmäßigen Betrieb günstig, wenn der Antriebsring mindestens zeitweise periodisch, insbesondere kreisförmig, in einer Ebene senkrecht um eine Längsachse I der Welle verschoben wird. Aufgrund der Steifigkeit des Antriebsrings führt jeder Punkt des Antriebsrings die gleiche Bewegung aus.

Es ist zur Herstellung einer gleichmäßigen Linearbewegung der Welle vorteilhaft, wenn der Antriebsring auch periodisch verkippt wird.

Dabei ist es insbesondere günstig, wenn der Antriebsring mit einer Kreisfrequenz $\Omega$ periodisch verkippt wird, welche einer Kreisfrequenz $\omega$ der periodischen Verschiebung des Antriebsrings entspricht, gegebenenfalls um einen Phasenwinkel $\gamma$ verschoben.

Insbesondere durch eine Verkippung des Antriebsrings mittels einer Wahl eines Phasenwinkels γ im Bereich [0;π] kann die Welle einfach und mit konstanter Geschwindigkeit z$_R$ eingestellt werden.

Es ist zur einfachen Ansteuerung unter Ausnutzung einer Kleinwinkelnäherung günstig, wenn ein Verkippungswinkel d weniger als 2° beträgt, insbesondere weniger als 0,1°.

| Figur 1 | zeigt in Aufsicht einen Antriebsring und eine Welle eines Taumelmotors, |
|---|---|
| Figur 2 | zeigt in Seitenansicht Antriebsring, Welle und Lager eines Taumelmotors, |
| Figur 3 | zeigt eine Bewegung des Antriebsring, |
| Figuren 4a bis 4d | zeigen verschiedene Stellungen des Taumelmotors, |
| Figur 5 | zeigt eine invertierte Bewegung des Antriebsring, |
| Figuren 6a bis 6d | zeigen verschiedene Stellungen des Taumelmotors bei invertierter Bewegung, |
| Figur 7 | zeigt einen Aktuator, |
| Figur 8 | zeigt in Aufsicht eine Ausführungsform des Taumelmotors, |
| Figur 9 | zeigt den Taumelmotor aus Figur 8in Seitenansicht, |
| Figur 10 | zeigt in Aufsicht eine weitere Ausführungsform des Taumelmotors, |
| Figur 11 | zeigt den Taumelmotor aus Figur 10 in Seitenansicht, |
| Figur 12 | zeigt in Seitenansicht eine weitere Ausführungsform des Taumelmotors, |
| Figur 13 | zeigt Aufsicht eine weitere Ausführungsform des Taumelmotors, |
| Figuren 14a bis 14c | zeigen verschiedene Ausführungsformen des Antriebsrings. |

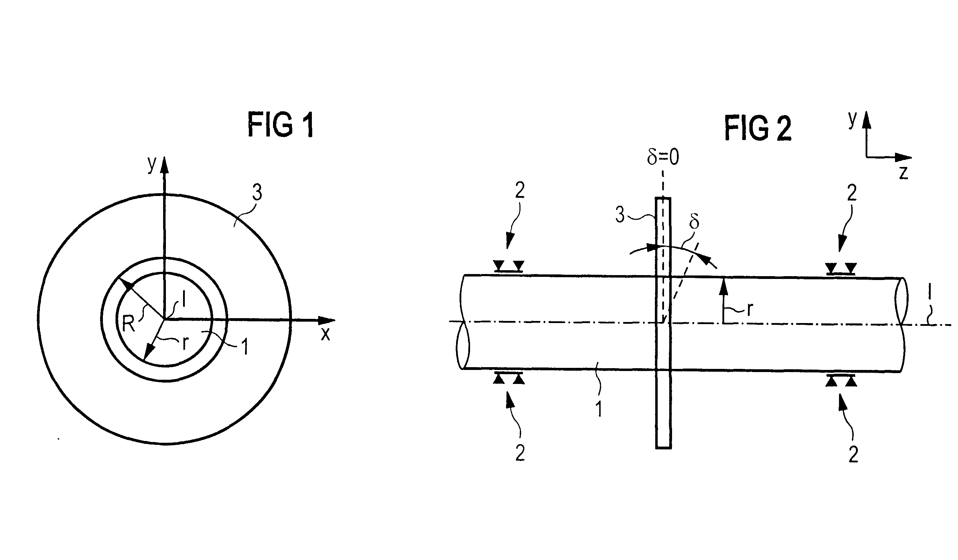

Figur 1 zeigt in Aufsicht auf die (x,y)-Ebene einen Antriebsring 3 und eine Welle 1 eines Taumelmotors.

In diesem und den folgenden Ausführungsbeispielen wird die Welle 1 mit Radius r wird von einem steifen, scheibenförmig Antriebsring 3 mit Innenradius R (R > r) umschlossen. Der Antriebsring 3 liegt in Ruhestellung (δ = 0) in der (x,y)-Ebene. Eine Lδngsachse I der Welle 1 ist in z-Richtung ausgerichtet. Diese Darstellung dient der besseren Beschreibung und ist nicht einschränkend.

Figur 2 zeigt in Seitenansicht den Antriebsring 3, die Welle 1 und sowie zwei Lager 2 des Taumelmotors.

Die Welle 1 ist drehbar und axial verschiebbar durch das Paar von Lagern 2 mit enger Toleranz gelagert. Die Lager 2 können z. B. Roll- oder, bevorzugt, Gleitlager sein. Der Antriebsring 3 kann in x- und y-Richtung verschoben und unabhängig davon mit einem Verkippungswinkel δ gegen die (x-y)-Ebene verkippt werden.

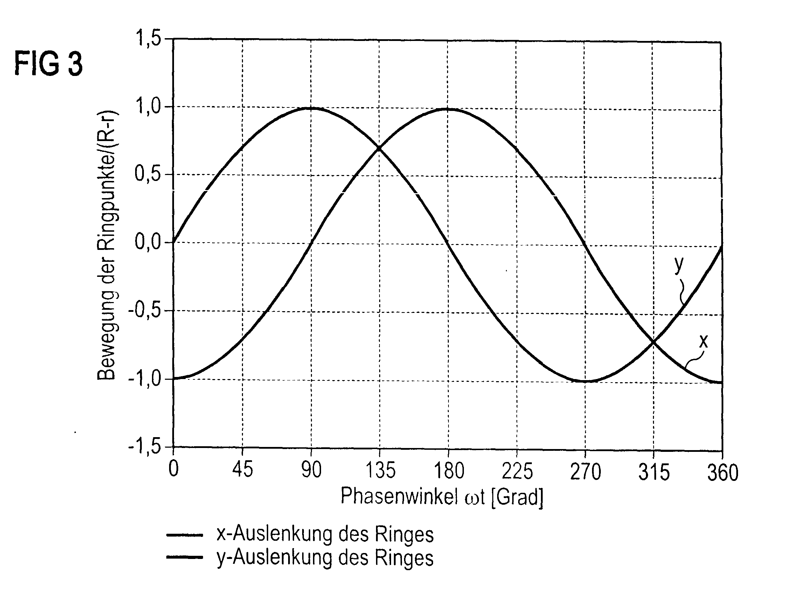

Figur 3 zeigt über eine Periode hinweg eine Auftragung einer auf (R-r) normierten Bewegung der Punkte des Antriebsrings 3 ("Ringpunkte") gegen einen Phasenwinkel (?t) in Grad mit Kreisfrequenz ω.

Zur Durchführung der Verschiebebewegung wird der Antriebsring 3 unter Aufrechterhaltung eines Reibschlusses periodisch um die Welle 1 gemäß:

$$x = -(R-r)\cdot\cos(\omega t) \qquad y = (R-r)\cdot\sin(\omega t) \qquad [1]$$

in x- und y-Richtung bewegt. Der Antriebsring 3 beschreibt dadurch eine rotationsfreie kreisförmige Verschiebebewegung in der (x,y)-Ebene mit einer Kreisfrequenz ?. Entsprechend lässt sich ein Phasenwinkel (ωt) definieren.

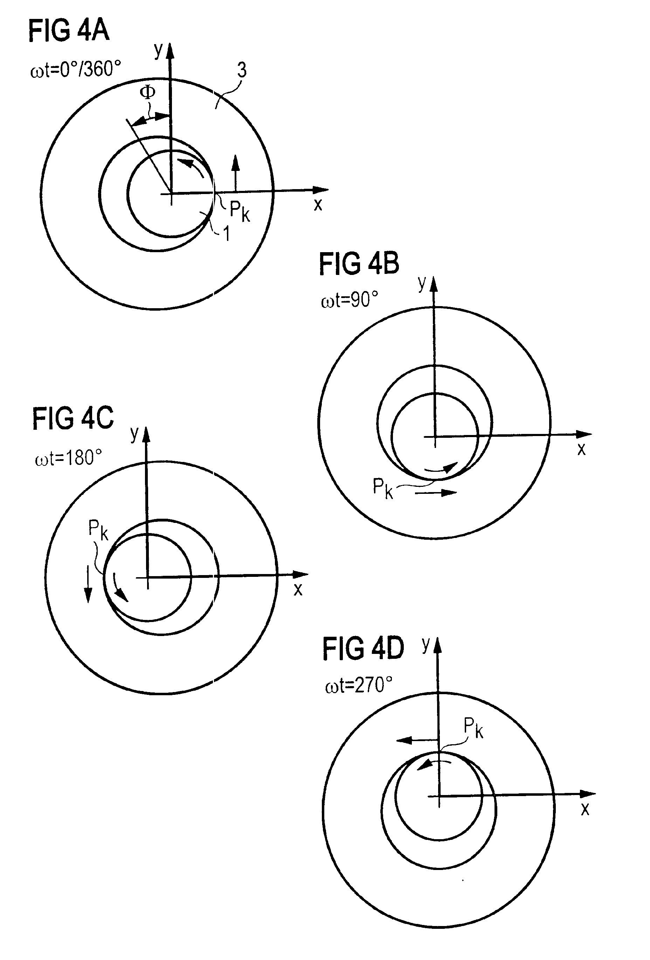

Figuren 4a bis 4d stellen in Aufsicht Momentaufnahmen für verschiedene Phasenwinkel von Welle 1 und Antriebsring 3 nach Fig. 1 dar: (ωt) = 0° bzw. 360° in Fig. 4a, (ωt) = 90° in Fig. 4b, (ωt) = 180° in Fig. 4c und (ωt) = 270° in Fig. 4d. Die Pfeile zeigen die momentane Bewegungsrichtung, d.h. die Richtung der Geschwindigkeitsvektoren, von Welle 1 und Antriebsring 3 an.

Unter der Voraussetzung, dass eine hinreichend große Andruckkraft bzw. Reibungskraft zwischen Antriebsring 3 und Welle 1 vorhanden ist, wird durch die kreisförmige Verschiebebewegung des Antriebsringes 3 gemäß Gl.

[1] ein gleichmäßiges Abrollen der Welle 1 an der Innenfläche des Antriebsrings 3 bewirkt, wodurch die Welle 1 in Rotation versetzt wird. Je höher die Reibungskraft zwischen Antriebsring 3 und Welle 1 ist, desto größer ist das maximale Drehmoment, das auf dieser Welle 1 übertragbar ist.

Die Rotation der Welle 1 ("Rotationsvortrieb"), gemessen in einer Winkeländerung ?Φ der Welle 1 pro Bewegungsperiode des Antriebsrings 3, hängt vom Radiusunterschied (R-r) zwischen Welle 1 und Antriebsring 3 gemäß

$$\Delta\Phi = 360° \cdot (R\text{-}r)/r \qquad\qquad [2]$$

ab. Also wird z. B. für den Fall, dass der Innenradius R des Antriebsrings 3 doppelt so groß ist wie der Radius r der Welle 1, bei einer umlaufenden Bewegung des Antriebsrings 3 die Welle 1 einmal um ihre Längsachse I gedreht.

Für die Drehzahl n der Welle 1 ergibt sich:

$$n = \omega/(2\Pi)\cdot(R\text{-}r)/r \qquad\qquad [3]$$

Der Winkel $\Phi_k$ des Punktes Pk senkrecht zur Längsachse I, an dem die Welle 1 momentan in Kontakt mit dem Antriebsring 3 steht ("Kontaktpunkt"), ergibt sich gemäß:

$$\Phi_k = -\omega\cdot t. \qquad\qquad [4]$$

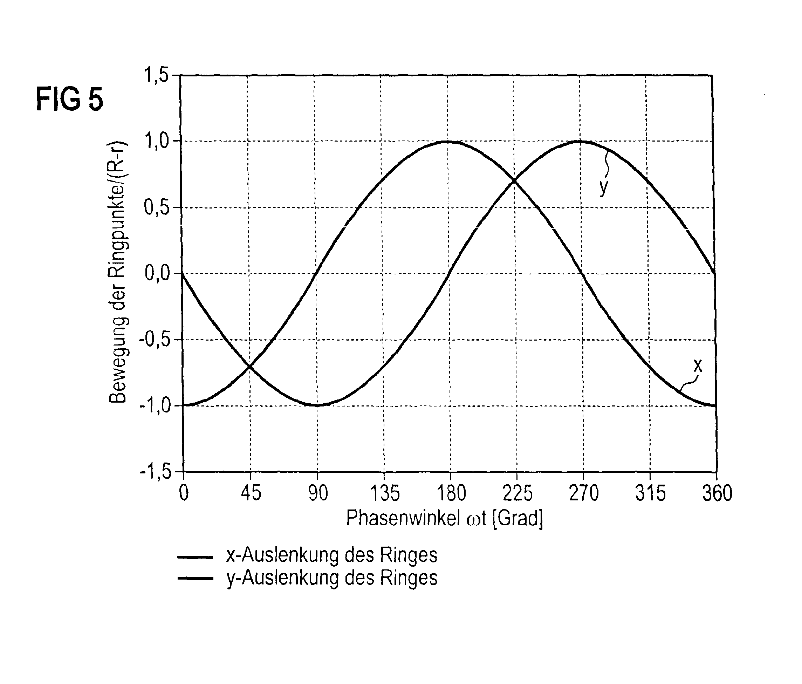

Figur 5 zeigt eine zu Figur 3 analoge Auftragung der auf (R-r) normierten Ringpunkte gegen den Phasenwinkel (ωt) fór eine invertierte Drehrichtung der Welle 1.

Der Antriebsring 3 wird dazu gemäß:

$$x = - (R\text{-}r)\cdot\cos(\omega t) \qquad y = -(R\text{-}r)\cdot\sin(\omega t) \qquad\qquad [5]$$

verschoben. Durch Vergleich mit Gl. [1] sieht man, dass zur Kommutierung der Drehrichtung lediglich die Bewegung des Antriebsringes 3 in y-Richtung invertiert wurde, d.h. gegenüber der ursprünglichen Drehrichtung die Phasenlage der x- und y- Ansteuersignale zueinander um 180° geändert wurde.

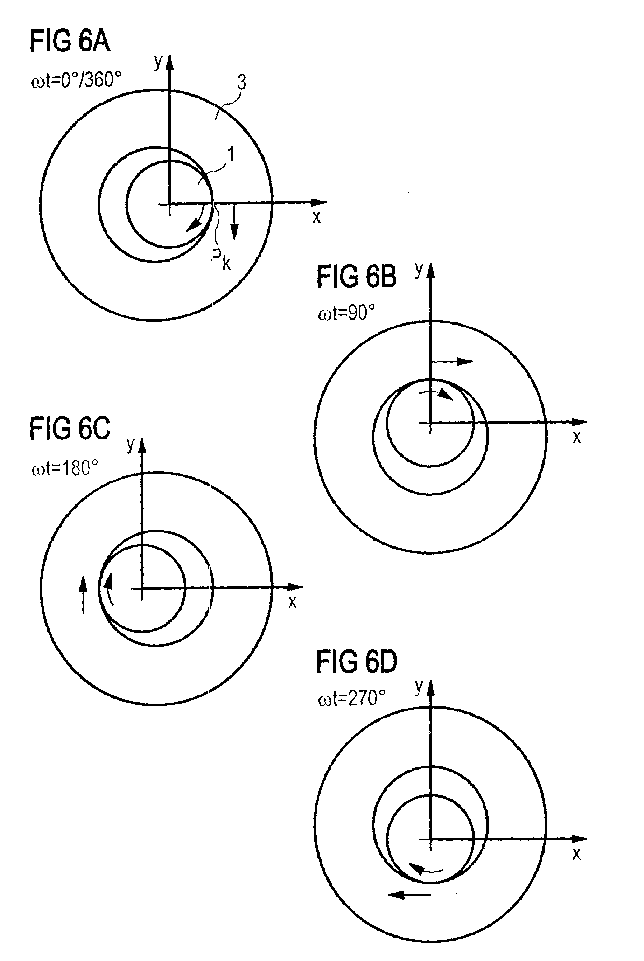

Die Figuren 6a bis 6d zeigen, analog zu den Fig. 4a bis 4d, Momentaufnahmen von Antriebsring 3 und Welle 1 für die Phasenwinkel (ωt) = 0° in Fig. 6a, (ωt) = 90° in Fig. 6b, (ωt) = 180° in Fig. 6c, (ωt) = 270° in Fig. 6d.

Bei hinreichend großer Andruckkraft wird durch die Bewegung des Antriebsringes 3 gemäß Gl. [5] wiederum eine gleichmäßige Abrollbewegung der Welle 1 am Antriebsring 3, nun aber mit entgegengesetztem Drehsinn, hervorgerufen.

Der Rotationsvortrieb ΔΦ ergibt sich aus den Gl. [2] mit umgekehrtem Vorzeichen. Die Drehzahl n der Welle 1 entspricht derjenigen aus Gl. [3]. Der Winkel $\Phi_k$ des Kontaktpunktes Pk entwickelt sich zeitlich gemäß:

$$\Phi_k = \omega\cdot t \qquad\qquad [6]$$

Zur Realisierung einer Linearbewegung wird der Antriebsring 3 gegen die Längsachse I verkippt (getaumelt). Zur Verdeutlichung wird der Antriebsring 3 nun vereinfachend so beschrieben, dass er in einer Ebene liegt, die sich durch den Länge 1 normierten, i. a. zeitabhängigen, Normalenvektor $\vec{n}$ beschreiben lässt. Somit genügen die Punkte $\vec{x}$ des Antriebsrings 3 der Ebenengleichung

$$\vec{n} \cdot \vec{x} = 0 \quad . \qquad\qquad [7]$$

Der Antriebsring 3 wird nun zeitabhängig so getaumelt, dass für den Normalenvektor $\vec{n}$ gilt:

$$\vec{n} \;=\; \frac{1}{\sqrt{a^2+b^2}}\begin{pmatrix} -a\cdot\sin(\Omega t+\gamma) \\ -a\cdot\cos(\Omega t+\gamma) \\ b \end{pmatrix} \qquad [8]$$

mit $\gamma$ einem allgemeinen Phasenwinkel, $\Omega$ einer Kreisfrequenz der Taumelbewegung und (a,b) = allgemeinen Amplituden.

Bei einer reinen Taumelbewegung, bei der der Ursprung des Normalenvektors $\vec{n}$ im Schwerpunkt des Antriebsrings 3 auf der z-Achse liegt, wird somit die Spitze des Normalenvektors $\vec{n}$ kreisförmig um die z-Achse gedreht. Diese reine Taumelbewegung wird im allgemeinen der kreisförmigen Verschiebebewegung überlagert.

Nun wird die Bewegung eines Punktes $\vec{x}_R$ am Innenradius R des Antriebsringes 3 für einen kleinen Verkippungswinkel d betrachtet. Die Koordinaten von $\vec{x}_R$ sind in Kleinwinkelnäherung (d < 2° mit tan$\cdot\delta$ = a/b) mit einem Fehler < 1 Promille durch:

$$\vec{x}_R = \begin{pmatrix} R\cdot\cos\varphi \\ R\cdot\sin\varphi \\ z_R \end{pmatrix} \qquad [9]$$

beschreibbar. Die z-Koordinate $z_R$ lässt sich durch Einsetzen von $\vec{x}_R$ in die Ebenengleichung [7] ermitteln:

$$z_R = \frac{a\cdot R}{b}\cdot\sin(\Omega t+\gamma+\varphi) \qquad [10]$$

Durch eine Differentiation nach der Zeit t erhält man die Geschwindigkeit $\dot{z}_R$:

$$\dot{z}_R = \frac{a\cdot R}{b}\cdot\Omega\cdot\cos(\Omega t+\gamma+\varphi) \qquad [11]$$

Der Ort am Innendurchmesser R des Antriebsringes 3 mit der maximalen Geschwindigkeit $\dot{z}_{R,max}$ = (a/b)$\cdot$R$\cdot\Omega$ in positiver z-Richtung ändert sich zeitabhängig, und seine Winkelkoordinate f befindet sich bei:

$$\varphi = -\,\Omega t - \gamma \qquad [12]$$

Genauso ändert sich der Ort am Innenradius R des Antriebsringes 3 mit der maximalen Geschwindigkeit $\dot{z}_{R,max}$ = (a/b)$\cdot$R$\cdot\Omega$ in negativer z-Richtung zeitabhängig. Seine Winkelkoordinate f befindet sich bei:

$$\varphi = \Pi - \Omega t - \gamma \qquad [13]$$

Wird die Welle 1 immer an dem Ort der maximalen positiven z-Geschwindigkeit $\dot{z}_{R,max}$ = (a/b)$\cdot$R$\cdot\Omega$ des Antriebsringes 3 mit diesem in Kontakt gehalten, erfolgt über den Reibschluss eine lineare Verschiebung der Welle 1 in positiver z-Richtung (entspr. $\varphi = -\Omega\cdot t - \gamma$) mit gleicher Geschwindigkeit $\dot{z}_{R,max}$.

Für eine Linearbewegung der Welle 1 mit Geschwindigkeit $\dot{z}_R$ muss diese folglich an dem Ort am Innenradius des Antriebsringes 3 mit der entsprechenden Geschwindigkeit $\dot{z}_R$ in Kontakt gehalten werden. Hierbei ist die Andruckkraft so zu wählen, dass ein ausreichender Kraftübertrag vom Antriebsring 3 auf die Welle 1 sichergestellt ist.

Zur Realisierung einer kombinierten Linear- und Drehbewegung der Welle 1 werden zwei Fälle betrachtet:

a) Drehbewegung in positive Winkelrichtung

Der Antriebsring 3 wird gemäß Gl. [1] bewegt und treibt damit die Welle 1 gemäß Gl. [2] zu einer Rotation in positiver Winkelrichtung an. Die Winkelkoordinate $\Phi_k$ des Kontaktpunktes Pk wird durch Gl. [4] beschrieben.

Nun wird simultan der Antriebsring 3 nach Gl. [8] mit der Kreisfrequenz $\Omega = \omega$ der x-y-Verschiebebewegung, gegebenenfalls mit einem geeigneten Phasenwinkel $\gamma$ gegenüber dieser, getaumelt.

Die Winkelposition $\varphi$ maximaler Geschwindigkeit $Z_{R,max}$, und damit maximaler Linearverschiebung in Richtung der positiven z-Achse liegt gemäß Gl. [12] bei f = -·$\Omega$·t·-·$\gamma$. Durch Gleichsetzen von Gl. [4] und Gl.[12] erhält man den Phasenwinkel $\gamma$, bei dem bei einer Rotation der Welle 1 in positiver Winkelrichtung eine simultane Linearbewegung der Welle 1 in Richtung der positiven z-Achse erreicht wird:

$$\gamma = 0 \,. \tag{14}$$

Analog müssen zur Linearbewegung der Welle 1 in Richtung der negativen z-Achse die Gl. [4] und Gl. [13] gleichzeitig erfüllt sein. Daher muss für diesen Fall gelten:

$$\gamma = \Pi \,. \tag{15}$$

Durch Wahl des Phasenwinkels $\gamma$ im Bereich [0;$\Pi$] kann somit kontinuierlich jede Vorschubgeschwindigkeit $z_R$ der Welle 1 in z-Richtung zwischen den Extremwerten

$$-\frac{a \cdot R}{b} \cdot \Omega \leq \dot{z}_R \leq \frac{a \cdot R}{b} \cdot \Omega \tag{16}$$

eingestellt werden.

b) Drehbewegung in negativer Winkelrichtung:

Der Antriebsring 3 wird gemäß Gl.[5] in der (x-y)-Ebene bewegt und treibt damit die Welle 1 zu einer Rotation in negativer Winkelrichtung an, entsprechend $\Omega = -\omega$. Die Winkelkoordinate $\Phi_k$ des Kontaktpunktes Pk wird durch Gl. [6] beschrieben.

Zur Linearbewegung der Welle 1 in Richtung der positiven z-Achse bei einer Rotation der Welle 1 in negativer Winkelrichtung, müssen Gl. [6] und Gl. [12] gleichzeitig erfüllt sein. Daraus ergibt sich ein Phasenwinkel $\gamma$ nach Gl. [14] nach $\gamma = 0$.

Analog muss für eine simultane Linearbewegung in Richtung der negativen z-Achse bei gleichzeitiger Erfüllung der Gl. [6] und [13] $\gamma = \pi$ entsprechend Gl. [15] gelten.

Durch Wahl des Phasenwinkels $\gamma$ im Bereich [0;$\pi$] kann somit ebenfalls kontinuierlich jede Vorschubgeschwindigkeit $z_R$ der Welle 1 gemäß Gl.[16] eingestellt werden.

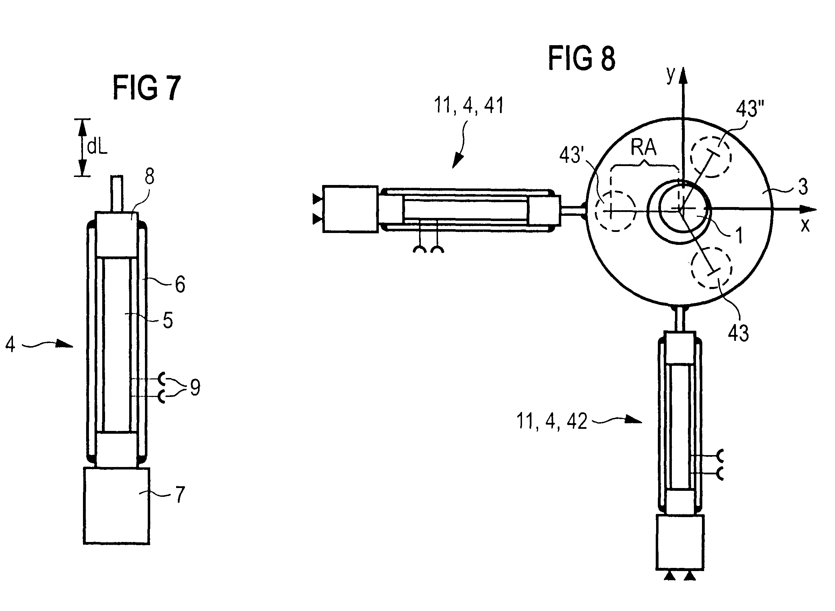

Figur 7 zeigt als Schnittdarstellung in Seitenansicht einen typischen Aufbau eines Aktuators 4 zur Bewegung des Antriebsrings 3.

Der Aktuator 4 beinhaltet einen Vielschicht-Piezoaktor 5 ("PMA" = piezoelectric multilayer actor) in Niedervolttechnik, eine Rohrfeder 6, eine Bodenplatte 7 und eine Deckplatte 8. Die Bodenplatte 7 und die Deckplatte 8 sind geeignet gestaltet, um steif, z.B. durch Schweißnähte, mit einem ebenfalls steifen Gehäuse verbunden zu werden. Der PMA 5 ist unter hoher Druckvorspannung mit einer Kraft von ca. 500 N bis 1000 N zwischen Bodenplatte 7 und Deckplatte 8 in die möglichst weiche Rohrfeder 6 eingeschweißt.

Eine Druckvorspannung des PMA 5 ist zweckmäßig, um zu vermeiden, dass der PMA 5 im hochdynamischen Betrieb schädlichen Zugspannungen ausgesetzt ist, die zu seiner Zerstörung führen könnten. Der Aktuator 4 wird ausgelenkt, indem der PMA 5 über Anschlussdrähte 9 elektrisch aufgeladen wird. Die Auslenkung dl ist in erster Näherung (unter Vernachlässigung vorhandener Hysterese-Effekte) proportional zur Ansteuerspannung.

Normalerweise wird der PMA 5 unipolar betrieben, d.h. nur mit einer positiven Auslenkung in seiner Längsrichtung. Allerdings ist es möglich, den PMA 5 bis zu einem begrenzten Spannungsniveau mit umgekehrter Polarität der Ansteuerspannung zu betreiben, ohne ihn zu depolarisieren. Dadurch ist eine Kontraktion des PMA 5 in Längsrichtung erreichbar.

Ein solcher Aktuator 4 kann vorteilhafterweise zur Bewegung der oben beschriebenen Bewegungsformen des Antriebsrings 3 eingesetzt werden.

Eine typische Dimensionierung für vergleichsweise kleine Antriebe ist: r = 1 cm, $R_A$ = 3 cm, 10 µm ? dl ? 50 µm. Daraus ergibt sich fór dl = 50 µm ein Verkippungswinkel $\delta$ von max. 50 µm / 3 cm ? 0,096°. Selbstverstδndlich ist die Dimensionierung nicht auf die Größenordnung dieses Ausführungsbeispiels oder die Nutzung der Kleinwinkelnäherung beschränkt.

Auch ist die Realisierung dieser Bewegungsformen nicht auf den Einsatz eines PMA 5 begrenzt, sondern es können allgemeine, z. B. elektromagnetisch, magnetostriktiv, elektrostriktiv oder auch hydraulisch angetriebene Stellantriebe eingesetzt werden.

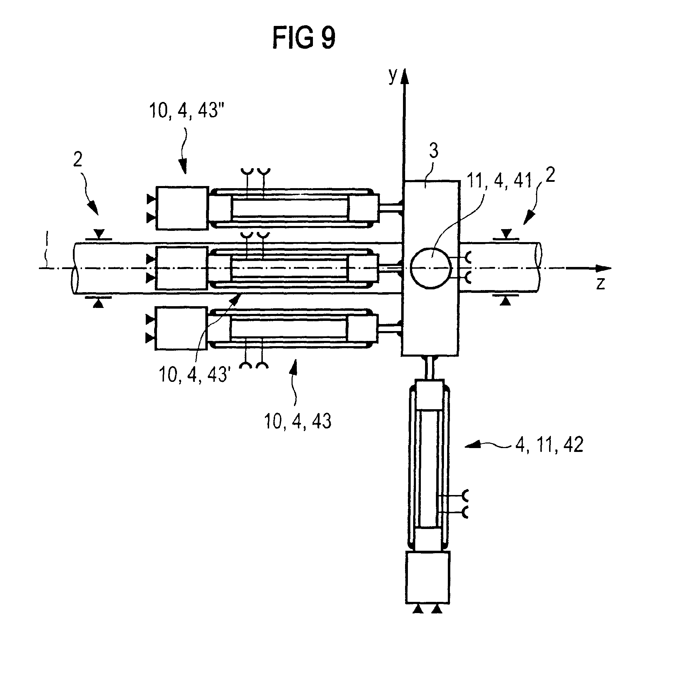

Die Figuren 8 und 9 zeigen in Aufsicht (Fig. 8) und in Seitenansicht (Fig. 9) eine Ausführungsform des Taumelmotors.

Der Taumelmotor verwendet eine Welle 1 mit Außenradius r, die mittels zweier Lager 2, die nur symbolisch eingezeichnet sind, um die z-Achse rotierbar und in z-Richtung verschiebbar gelagert ist. Er weist auch einen steifen Antriebsring 3 mit Innenradius $R > r$ auf, der in Ruhestellung ($\delta = 0$) in der x- y-Ebene liegt.

Der Antriebsring 3 ist über insgesamt fünf piezoelektrisch angetriebene Aktuatoren 4,41,42,43,43',43" gegenüber einem steifen Gehäuse frei bewegbar und in diesem Gehäuse gelagert. Die steife Verbindung der Aktuatoren 4,41,42,43,43',43" mit dem Gehäuse ist durch Dreiecksymbole angedeutet.

Die Bewegungen der Aktuatoren 4,41,42,43,43',43" können in guter Näherung als unabhängig voneinander betrachtet werden, da die Steifigkeit eines Aktuators 4,41,42,43,43',43" in Längsrichtung sehr viel größer ist als seine Biegesteifigkeit.

Wie in Fig. 8 dargestellt, kann der Antriebsring 3 durch einen Aktuator 4,41 in x-Richtung und durch einen weiteren Aktuator 4,42 in y-Richtung um jeweils eine Maximalauslenkung dl eines Aktuators 4 verschoben werden. Diese beiden Aktuatoren 41,42 sind Teile eines Antriebsmittels 11 zur Verschiebung des Antriebsrings 3 um die Welle 1.

Um durch geeignete Ansteuerung der Aktuatoren 41,42 immer eine ausreichende Andruckkraft zwischen Antriebsring 3 und Welle 1 sicherzustellen, ist die Bedingung

$$dl > 2 \cdot (R-r) \qquad [17]$$

einzuhalten. Durch eine geeignete Anfangsmontage des Antriebsringes 3 und durch geeignete Ansteuerspannungen der Aktuatoren 4,41,42 kann eine Drehbewegung der Welle 1 nach dem oben beschriebenen Prinzip erreicht werden.

Zur Realisierung einer Linearbewegung der Welle 1 in z-Richtung wird der Antriebsring 3 gegenüber der (x-y)-Ebene vorzugsweise gemäß der Gl. [7],[8] mit einer geeigneten Phasenbeziehung $\gamma$ zur (x-y)-Bewegung verkippt ("getaumelt").

Die Verkippbewegung wird durch eine Verkippeinheit 10 gesteuert, welche drei Aktuatoren 4,43,43',43" umfasst. Wie in Figur 8 gezeigt, sind die Aktuatoren 43,43',43" winkelsymmetrisch und im gleichen Abstand $R_A$ um den Bohrungsmittelpunkt des Antriebsrings 3 herum angebracht und parallel zur z-Achse ausgerichtet. Die präzise Einstellung der Verkippbewegung wird durch eine geeignete Steuerspannung an den Aktuatoren 43,43',43" erreicht.

Es ist selbstverständlich auch eine Verwendung von mehr als drei Aktuatoren 43,43',43" möglich, zweckmäßigerweise, aber nicht notwendigerweise, mit konstantem Winkelabstand zueinander und in festem Radius $R_A$ vom Bohrungsmittelpunkt. Auch weniger als drei Stellantriebe, z. B. zwei Stellantriebe zusammen mit einer frei gelagerten Stange, sind einsetzbar, aber vergleichsweise kompliziert ansteuerbar.

Werden an die drei Aktuatoren 43,43',43" der Verkippeinheit 10 die zeitabhängigen Spannungsverläufe $U_{43}$, $U_{43'}$, $U_{43"}$ mit

$$U_{43}(t) = \frac{U_{max}}{2} \cdot (1 + \sin(\Omega t + \gamma + \pi/6))$$

$$U_{43'}(t) = \frac{U_{max}}{2} \cdot (1 + \sin(\Omega t + \gamma + \pi)) \qquad [18]$$

$$U_{43"}(t) = \frac{U_{max}}{2} \cdot (1 + \sin(\Omega t + \gamma - \pi/6))$$

angelegt, so werden die Koordinaten der entsprechenden Verbindungsstellen dieser Aktuatoren 43,43',43" zum Antriebsring 3 durch die Vektoren

$$\vec{r}_{43} = \begin{pmatrix} R_A \cos\left(\dfrac{\pi}{6}\right) \\[2mm] R_A \sin\left(\dfrac{\pi}{6}\right) \\[2mm] \dfrac{dl}{2}\cdot\left(1+\sin\left(\Omega t+\gamma+\dfrac{\pi}{6}\right)\right) \end{pmatrix} ; \quad \vec{r}_{43'} = \begin{pmatrix} R_A \cos\pi \\[2mm] R_A \sin\pi \\[2mm] \dfrac{dl}{2}\cdot\left(1+\sin\left(\Omega t+\gamma+\pi\right)\right) \end{pmatrix} ;$$

$$\vec{r}_{43''} = \begin{pmatrix} R_A \cos\left(-\dfrac{\pi}{6}\right) \\[2mm] R_A \sin\left(-\dfrac{\pi}{6}\right) \\[2mm] \dfrac{dl}{2}\cdot\left(1+\sin\left(\Omega t+\gamma-\dfrac{\pi}{6}\right)\right) \end{pmatrix} ; \qquad\qquad [19]$$

beschrieben. Bei dieser Art der Ansteuerung wird die Bewegung der durch diese Vektoren aufgespannte Ebene definiert durch:

$$\vec{n}\cdot\vec{x} - d = 0 \qquad\qquad [20]$$

mit dem auf Länge 1 normierten, zeitabhängigen Normalenvektor

$$\vec{n} = \frac{2}{\sqrt{dl^2+4R_A^2}}\begin{pmatrix} -\dfrac{dl}{2}\cdot\sin(\Omega t+\gamma) \\[2mm] -\dfrac{dl}{2}\cdot\cos(\Omega t+\gamma) \\[2mm] R_A \end{pmatrix} \qquad\qquad [21]$$

und dem Abstand

$$d = \frac{dl\cdot R_A}{\sqrt{dl^2+4R_A^2}}$$

vom Koordinatenursprung.

Diese Bewegung ist analog zu der in den Gl. [7], [8] beschriebenen Taumelbewegung, außer dass das Bezugssystem mittels des Abstands d beschrieben wird. Durch geeignete Abstimmung von $\Omega = \pm\omega$ und $0 \leq \gamma \leq n$ lässt sich einer Links-bzw. Rechtsrotation der Welle 1 eine Linearbewegung in z-Richtung mit einer Geschwindigkeit

$$-\frac{dl\cdot R}{2R_A}\,\omega \leq \dot{z} \leq \frac{dl\cdot R}{2R_A}\,\omega \qquad\qquad [22]$$

überlagern.

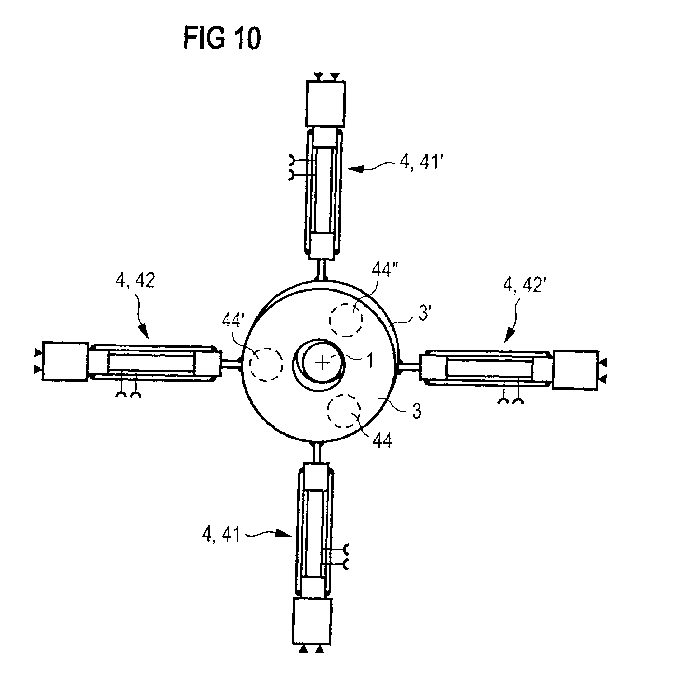

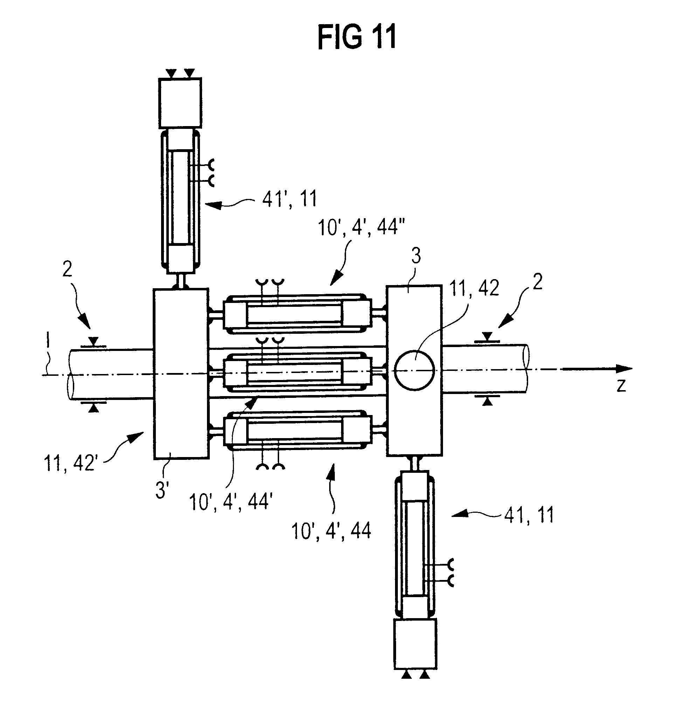

Die Figuren 10 und 11 zeigen in Aufsicht (Fig. 10) und in Seitenansicht (Fig. 11) eine weitere Ausführungsform eines Taumelmotors mit zwei phasenstarr gekoppelten Antriebsringen 3,3'.

Durch eine gegenseitige Verspannung zweier Antriebsringe 3,3' kann eine steife und spielfreie Lagerung der Welle 1 erreicht werden, wobei sich die Kontaktpunkte der Antriebsringe 3,3' an die Welle 1 immer gegenüber liegen. Die Bewegung des zweiten Antriebsrings 3' wird durch eine zweite Verschiebeeinheit 11'' mit zwei Aktuatoren 41',42' bewirkt. Diese Aktuatoren 41',42' sind bezüglich der Aktuatoren 41,42 der ersten Verschiebeeinheit 11 um 180° um die z-Achse gedreht.

Die geeignete zeitabhängige Verkippung der Antriebsringe 3,3' gegen die (x-y)-Ebene (Taumelbewegung) wird durch eine Verkippeinheit 10' gewährleistet, die 3 Aktuatoren 44,44',44'' aufweist, welche zueinander parallel in z-Richtung ausgerichtet sind. Jeweils ein Ende eines Aktuators 44,44',44'' ist mit einem Antriebsring 3,3' verbunden.

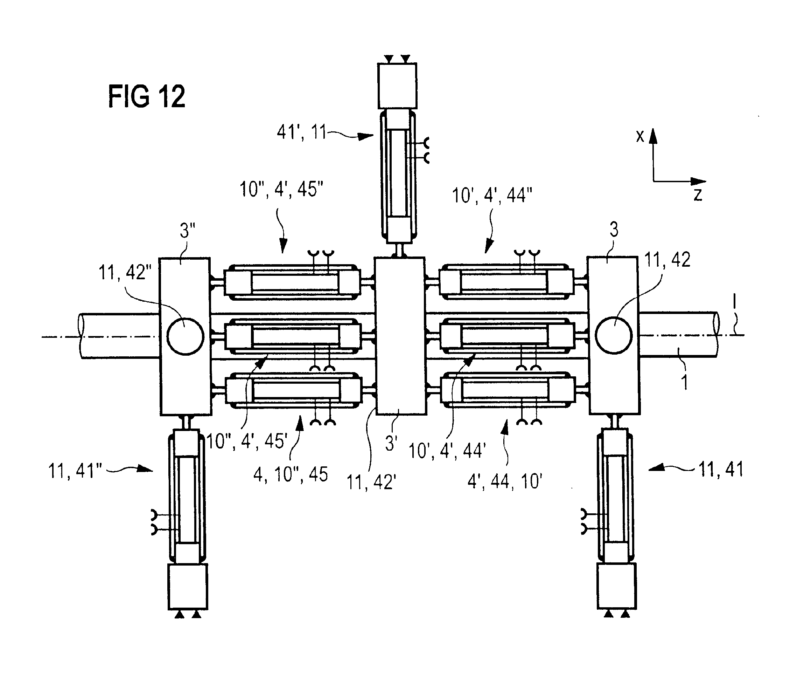

Figur 12 zeigt in Seitenansicht einen Taumelmotor mit drei phasenstarr gekoppelten Antriebsringen 3,3',3''.

Zusätzlich zur Bauform in den Fig. 10 und 11 ist nun ein dritter Antriebsring 3'' gleich dem ersten Antriebsring 3 mit zwei Aktuatoren 41'',42'' einer dritten Verschiebeeinheit 11'' vorhanden. Der dritte Antriebsring 3'' ist mit dem weiteren Antriebsring 3' über eine zweite Verkippeinheit 10'' mit drei Aktuatoren 45,45'45'' verbunden.

Diese Bauform ist besonders vorteilhaft, da durch die gegenseitige Verspannung der Antriebsringe 3 kein Drehmoment auf die Welle 1 ausgeübt wird. Der Taumelmotor kann daher auch lagerfrei aufgebaut werden.

Die Zuordnung der Aktuatoren zu einer bestimmten Verschiebeeinheiten 11,11',11'' ist unerheblich. Beispielsweise können auch alle in x- und y-Richtung wirkenden Aktoren 4,41,41',41'',42,42',42'' als Teile einer Verschiebeeinheit aufgefasst werden; analog können beispielsweise alle in z-Richtung wirkenden Aktoren 4,43,43',43'',44,44',44'', 45,45',45'' als Teil einer Verkippeinrichtung aufgefasst werden.

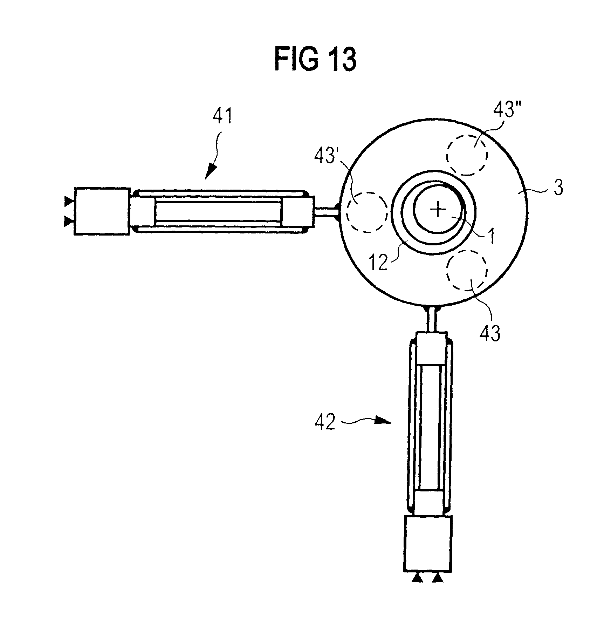

Fig. 13 zeigt die Aufsicht eine weitere Ausführungsform eines Taumelmotors.

Gegenüber dem in den Fig. 8 dargestellten Motor weist der Antriebsring 3 eine innere Ringschale 12 auf, die über ein Kugel-, Rollen oder Gleitlager 12 mit dem restlichen Antriebsring 3 verbunden ist. Der Antriebsring (3) liegt an der inneren Ringschale (12) an der Welle (1) an. Die innere Ringschale 12 kann somit um eine durch den Bohrungsmittelpunkt führende Achse rotieren.

Dadurch, dass die Abrollbewegung der Welle 1 auf der frei rotierbaren innere Ringschale 12 erfolgt, kann auf die Welle 1 nun kein Drehmoment mehr übertragen werden. Der Linearvortrieb der Welle 1 aufgrund der Taumelbewegung des Antriebsrings 3 bleibt jedoch erhalten.

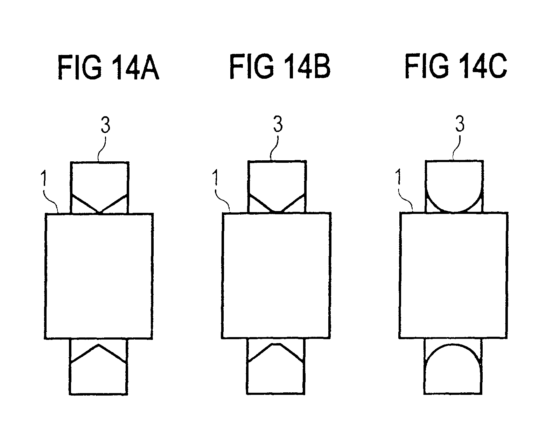

Die Figuren 14a bis 14c zeigen als Schnittdarstellung verschieden geformte Innenflächen des Antriebsrings 3. Diese können zur Optimierung der Kontaktzone zur Welle 1 anstelle einer zylindrischen auch eine andere Form aufweisen, z.B. spitz (Fig. 14a), abgeflacht spitz (Fig. 14b), parabolisch, hyperbolisch, kreisförmig (Fig. 14c) oder konisch.

Der Taumelmotor kann somit in den verschiedensten Betriebsmodi der Welle 1 betrieben werden, die in der folgenden Tabelle nicht einschränkend aufgeführt sind:

| Rotation | | Linearantrieb | |
|---|---|---|---|
| Linksrotation | Rechtsrotation | positive z-Richtung | negative z-Richtung |
| kontinuierlich | | kontinuierlich | |
| kontinuierlich | | | kontinuierlich |
| | kontinuierlich | kontinuierlich | |
| | kontinuierlich | | kontinuierlich |
| schrittweise | | schrittweise | |
| schrittweise | | | schrittweise |
| | schrittweise | schrittweise | |
| | schrittweise | | schrittweise |
| keine resultierende Rotation nur periodische Drehung | | schrittweise | |
| keine resultierende Rotation nur periodische Drehung | | | schrittweise |
| keine resultierende Rotation nur periodische Drehung | | kontinuierlich | |
| keine resultierende Rotation nur periodische Drehung | | | kontinuierlich |
| FREILAUF | | | |

(fortgesetzt)

| Rotation | Linearantrieb |
|---|---|
| BLOCKIERT (Grundzustand) | |

**Patentansprüche**

1.  Taumelmotor, aufweisend

    -   mindestens eine drehbar und axial verschiebbar geführte Welle (1)
    -   mindestens einen die Welle (1) umschließenden Antriebsring (3,3',3"), der gegen eine Längsachse (I) der Welle (1) verkippbar ist,

    **dadurch gekennzeichnet, dass**
    der mindestens eine Antriebsring (3,3',3") reibschlüssig und rotationsfrei um die Welle (1) verschiebbar ist.

2.  Taumelmotor nach Anspruch 1, bei dem
    der mindestens eine Antriebsring (3,3',3") mittels mindestens eines Verkippmittels (10,10',10"), umfassend mindestens zwei Aktuatoren (4,4,43,43',43",44,44',44",45,45',45"), gegen die Welle (1) verkippbar ist.

3.  Taumelmotor nach Anspruch 2, bei dem
    die Aktuatoren (4,43,43',43",44,44',44",45,45',45") des Verkippmittels (10,10',10") im wesentlichen parallel zur Längsachse (I) der Welle (1) ausgerichtet sind.

4.  Taumelmotor nach einem der Ansprüche 2 oder 3, bei dem das Verkippmittel (10,10',10") mindestens drei Aktuatoren (4,43,43',43",44,44',44",45,45',45") enthält, welche winkelsymmetrisch und mit gleichem Abstand ($R_A$) an mindestens einem Antriebsring (3,3',3") angebracht sind.

5.  Taumelmotor nach einem der vorhergehenden Ansprüche, bei dem der mindestens eine Antriebsring (3) mittels mindestens eines Antriebsmittels (11,11',11"), umfassend mindestens zwei nicht kollinear ausgerichtete Aktuatoren (41,41',41",42,42',42"), um die Welle (1) verschiebbar ist.

6.  Taumelmotor nach Anspruch 5, bei dem
    die mindestens zwei Aktuatoren (41,41',41",42,42',42") des jeweiligen Antriebsmittels (11,11',11") senkrecht zur Längsachse (I) und rechtwinklig zueinander angeordnet sind.

7.  Taumelmotor nach einem der Ansprüche 2 bis 6, bei dem mindestens ein Aktuator (4) ein elektromechanischer Aktor, insbesondere ein Vielschicht-Piezoaktor, ist.

8.  Taumelmotor nach einem der vorhergehenden Ansprüche, bei dem mindestens ein Aktuator (4) ein elektrostriktiver, magnetostriktiver, elektromagnetischer oder hydraulischer Aktor ist.

9.  Taumelmotor nach einem der vorhergehenden Ansprüche, bei dem parallel zu einem ersten Antriebsring (3) mindestens ein weiterer Antriebsring (3') vorhanden ist, die beide durch mindestens ein Verkippmittel (10) gegeneinander abgestützt sind.

10. Taumelmotor nach Anspruch 9, bei dem
    ein erster Antriebsring (3) und ein weiterer Antriebsring (3') vorhanden sind, deren jeweiliger Kontaktpunkt mit der Welle (1) um 180 ° um die Längsachse (I) gedreht ist.

11. Taumelmotor nach Anspruch 9, bei dem
    mindestens ein dritter Antriebsring (3") parallel zum ersten Antriebsring (3) und zum weiteren Antriebsring (3') vorhanden ist, wobei der weitere Antriebsring (3') gegen den ersten Antriebsring (3) und gegen den dritten Antriebsring (3") mittels jeweils eines Verkippmittels (10,10') abgestützt ist.

12. Taumelmotor nach Anspruch 11, bei dem

die Welle (1) durch die mindestens drei Antriebsringe (3,3',3") drehmomentenfrei geführt wird.

13. Taumelmotor nach einem der Ansprüche 1 bis 11, bei dem die Welle (1) durch mindestens ein Lager (2) geführt wird.

14. Taumelmotor nach einem der vorhergehenden Ansprüche, bei dem der Antriebsring (3) an einer frei rotierbaren inneren Ringschale (12) an der Welle (1) anliegt.

15. Verfahren zum Antrieb einer Welle (1), bei dem

- mindestens ein Antriebsring (3) in einer mindestens teilweisen periodischen Bewegung rotationsfrei und reibschlüssig um die Welle (1) verschoben wird,
- der mindestens eine Antriebsring (3) gegen die Längsachse (I) der Welle (1) verkippt wird.

16. Verfahren nach Anspruch 15, bei dem

der Antriebsring (3) mindestens zeitweise gemäß einer der Gleichungen:

$$x = -(R-r)\cdot\cos(\omega t) \quad y = (R-r)\cdot\sin(\omega t)$$

oder

$$x = -(R-r)\cdot\cos(\omega t) \qquad y = -(R-r)\cdot\sin(\omega t)$$

senkrecht um eine Längsachse (I) der Welle (1) verschoben wird.

17. Verfahren nach einem der Ansprüche 15 oder 16, bei dem der Antriebsring (3) periodisch verkippt wird.

18. Verfahren nach Anspruch 17, bei dem
der Antriebsring (3) mit einer Kreisfrequenz ($\Omega$) periodisch verkippt wird, welche einer Kreisfrequenz ($\omega$) der periodischen Verschiebung des Antriebsrings entspricht.

19. Verfahren nach einem der Ansprüche 17 oder 18, bei dem der Antriebsring (3) so verkippt wird, dass die Geschwindigkeit $\dot{z}_R$ der Welle (1) durch eine Wahl eines Phasenwinkels ($\gamma$) im Bereich $[0;\Pi]$ einstellbar ist.

20. Verfahren nach einem der Ansprüche 17 bis 19, bei dem ein Verkippungswinkel ($\delta$) weniger als 2° betrδgt.

# FIG 1

# FIG 2

EP 1 143 535 A1

FIG 3

Phasenwinkel ωt [Grad]

Bewegung der Ringpunkte/(R-r)

—— x-Auslenkung des Ringes
—— y-Auslenkung des Ringes

EP 1 143 535 A1

FIG 4A

$\omega t=0°/360°$

FIG 4B

$\omega t=90°$

FIG 4C

$\omega t=180°$

FIG 4D

$\omega t=270°$

FIG 5

## FIG 6A

ωt=0°/360°

## FIG 6B

ωt=90°

## FIG 6C

ωt=180°

## FIG 6D

ωt=270°

FIG 8

FIG 7

# FIG 9

10, 4, 43"

2

3

11, 4, 41    2

10, 4, 43'

10, 4, 43

4, 11, 42

y

z

# FIG 10

## FIG 11

FIG 12

# FIG 13

FIG 14A   FIG 14B   FIG 14C

EP 1 143 535 A1

**Europäisches Patentamt**

# EUROPÄISCHER RECHERCHENBERICHT

**Nummer der Anmeldung**

EP 01 10 7919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 757 223 A (UEYAMA) 12. Juli 1988 (1988-07-12)<br><br>* das ganze Dokument *<br>--- | 1-3,5-8, 13,15, 17-20 | H01L41/09 |
| A | WO 97 26702 A (BINOS) 24. Juli 1997 (1997-07-24)<br>* Seite 5, Zeile 14 - Seite 6, Zeile 8 *<br>* Seite 7, Zeile 5 - Seite 9, Zeile 28; Abbildungen 1,2,5-7 *<br>--- | 1,5-7 | |
| A | US 5 079 471 A (NYGREN, JR. ) 7. Januar 1992 (1992-01-07)<br>* Spalte 2, Zeile 17-52 *<br>* Spalte 3, Zeile 33 - Spalte 4, Zeile 38; Abbildungen 1,2 *<br>--- | 1,5-7 | |
| A | US 4 888 515 A (TAMURA) 19. Dezember 1989 (1989-12-19)<br>* Spalte 1, Zeile 59 - Spalte 2, Zeile 60; Abbildung 1 *<br>----- | 1 | |

**RECHERCHIERTE SACHGEBIETE (Int.Cl.7)**

H01L

Der vorliegende Recherchenbericht wurde für alle Patentansprüche erstellt

| Recherchenort | Abschlußdatum der Recherche | Prüfer |
|---|---|---|
| BERLIN | 2. August 2001 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

25

## ANHANG ZUM EUROPÄISCHEN RECHERCHENBERICHT
## ÜBER DIE EUROPÄISCHE PATENTANMELDUNG NR.

EP 01 10 7919

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2001

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US 4757223 | A | | 12-07-1988 | JP<br>DE<br>EP | 62171457<br>3778393<br>0234274 | A<br>A<br>A | 28-07-1987<br>27-05-1992<br>02-09-1987 |
| WO 9726702 | A | | 24-07-1997 | AU | 1361397 | A | 11-08-1997 |
| US 5079471 | A | | 07-01-1992 | KEINE | | | |
| US 4888515 | A | | 19-12-1989 | JP | 62152381 | A | 07-07-1987 |

EPO FORM P0461